# EUROPEAN PATENT APPLICATION

(11) **EP 1 057 709 A2**
(43) Date of publication of application: **06.12.2000**
(21) Application number: 00111184.8
(22) Date of filing: 24.05.2000
(51) Int. Cl.: B62B 9/00, B62B 9/08

(54) **Stroller**

(30) Priority: 25.05.1999 CA 2272676
(71) Applicant: 634182 Alberta Ltd., Calgary, Alberta T2H 2K4 (CA)
(72) Inventor: Britton, Daniel William, Calgary, Alberta T2H 2K4 (CA); Miller, Karl Mack, Calgary, Alberta T2H 2K4 (CA); Compri, Michel, Edmonton, Alberta T5Z 2Z6 (CA); McCurdy, Scott Alexander, Edmonton, Alberta T5L 3X2 (CA)
(74) Representative: Gauger, Hans-Peter, Dipl.-Ing.

(57) **Abstract**

The application describes a stroller useful for transporting children while in-line skating. The stroller includes a front pair of wheels, a middle pair of wheels and a rear pair of wheels. The rear pair of wheels acts to support a portion of the weight of the stroller and cargo when the stroller is rocked back, for example, when the stroller is tipped back to move over obstacles. The middle wheels are positioned relative to the rear and front wheels in order to permit the stroller to be driven while riding only on the middle wheels. Such an arrangement facilitates turning of the stroller. The stroller includes a brake for stopping both the stroller and the skater quickly and evenly on both sides of the stroller.

## Description

### Field of the Invention

This invention is directed to a stroller and, in particular, to a stroller for use while in-line skating.

### Background of the Invention In recent years in-line skating has become increasingly popular. Some in-line skaters wish to transport their children while skating. However, previously available strollers have sometimes proven to be unsuitable for use by a person wearing in-line skates. As an example, it is difficult to quickly stop most strollers. In addition, the forward leaning skating stance of novice skaters tends to cause previous strollers to tip backwards. The high centre of gravity on most strollers can make them not adequately stable for use while skating.

Strollers with pivoting wheels, when used by persons wearing in-line skates, tend not to track straight when force is applied unevenly to a side and rattle or vibrate at higher speeds. This makes the stroller more difficult to control and could cause a skater to lose their balance.

A stroller is needed which is suitable for use while in-line skating.

### Summary of the Invention

A stroller has been invented which is suitable for pushing by a person who is in-line skating. The stroller is easy to steer, yet tracks very straight. The stroller can be braked quickly and is resistant to dangerous tipping both sideways and backwards by normal application of force, such as by controlled leaning on the handle of the stroller. However, the stroller can be tipped backwards, if necessary, to move over obstacles, such as curbs.

In accordance with a broad aspect of the present invention, there is provided a stroller having a forward end and a rear end and a long axis extending through the forward end and the rear end, the stroller comprising: a frame, a handle for grasping and moving the stroller and a plurality of wheels for supporting the frame including at least one forward wheel positioned forward of the strollers centre of gravity and at least one middle wheel positioned rearward of the strollers centre of gravity and at least one rear support positioned rearward of the at least one middle wheel, there being sufficient wheels to support the stroller in an upright position when the stroller is resting on the wheels.

The frame of the stroller can be formed of various materials including, but not limited to, aluminum tubing or polymeric rods. Preferably, it is formed at its rear end, for example by sloping or recessing the rear end forwardly, to provide adequate space for a full skating stride. In one embodiment, the frame is formed of rigid structural members, but is formed to be foldable into a more compact arrangement. The folding arrangement can operate in various ways. The frame supports a seat for accepting one or more children and, if desired, a covering to form an enclosed or partially enclosed compartment about the seat. The seat can be front or rear facing, as desired.

The handle can be connected to the frame or formed integral therewith, as desired. Preferably, the handle extends out from the rear end of the stroller and is height adjustable for different size skaters.

The wheels are selected to support the frame and permit it to be rolled as by pushing. The wheels are positioned to cause the stroller to be somewhat resistant to tipping even when a selected amount of force is applied downwardly or upwardly to handle. The wheels can be of any desired size. Preferably, the wheels are mounted to rotate in planes parallel with the long axis of the stroller and are restricted from pivoting out of these planes.

In one embodiment particularly suited for use during in line skating, the at least one forward wheel and the at least one middle wheel are mounted on the frame to contact a planar ground surface simultaneously, while the at least one rear support is mounted on the frame to be spaced a selected distance above the ground surface when the at least one forward wheel and the at least one middle wheel are in contact with a planar surface. This permits the stroller to be rocked on the at least one middle wheel and, thereby, to work more efficiently with the motion of a skater and to facilitate turning.

The at least one rear support can be mounted on the frame. Alternately, in one embodiment, the at least one rear support is mounted on an extension which is, in turn, mounted on the frame such that the rear support extends out rearwardly of the adjacent frame. The extension can be mounted to the frame by forming integral therewith, or by attachment thereto. In one embodiment, the extension is mounted by a pivotal connection onto the frame to permit limited pivoting of the extension in a plane parallel to the strollers long axis. In one embodiment, a biasing means such as, for example, an elastomeric member or a spring is provided to bias the extension downwardly. An application of force against the tension in the biasing means such as, for example, by placing force on the at least one rear support, for example, causes the extension to pivot about its connection to the frame. This connection arrangement for the at least one rear support, provides that the stroller can be tipped further back than normal while remaining resting on the at least one middle wheel and the at least one rear support. This facilitates moving over larger obstacles such as curbs. If desired, the tension in biasing means can be selected, for example, by preloading or by replacement of the biasing means with a biasing means having another tension rating.

The at least one rear support can be any desired member for supporting the stroller when the stroller is tipped backward onto it. In one embodiment, the at least one rear support is a skid pad, while in another embodiment, the at least one rear support is one or more wheels. Where the at least one rear support is one or more wheels, the wheels can be permitted to pivot, for example, in a manner similar to casters.

To facilitate sudden stops, the stroller is preferably provided with a braking system. In one embodiment, the braking system acts on all of the front and middle wheels of the stroller. The wheels are preferably braked substantially evenly and/or substantially simultaneously to prevent the stroller from veering sideways and from losing braking capability as the weight shifts during a braking procedure. In one embodiment, a hand control is positioned on the stroller handle to control the braking system.

According to another broad aspect of the present invention, there is provided a stroller having a forward end and a rear end and a long axis extending through the forward end and the rear end, the stroller comprising: a frame, a handle for grasping and moving the stroller and a plurality of wheels for supporting the frame including at least one front wheel positioned forward of the strollers centre of gravity, at least one wheel positioned rearward of the centre of gravity, there being sufficient wheels to support the stroller in an upright position when the stroller is resting on the wheels and a braking system for braking the stroller and selected to act on both the at least one front wheel and the at least one wheel positioned rearward of the centre of gravity.

The stroller can include at least one support positioned behind the at least one wheel positioned rearward of the centre of gravity. The at least one support can be for example, one or more wheels. These wheels can be actuated to brake, if desired.

### Brief Description of the Drawings

A further, detailed, description of the invention, briefly described above, will follow by reference to the following drawings of specific embodiments of the invention. These drawings depict only typical embodiments of the invention and are therefore not to be considered limiting of its scope. In the drawings:
Figure 1 is a front elevation view of a stroller according to the present invention;
Figure 2 is a side elevation view of the stroller of Figure 1 with the seat removed;

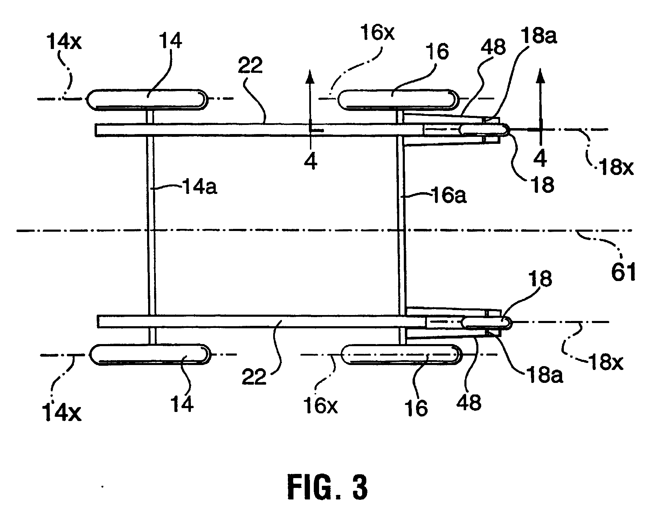

Figure 3 is a schematic plan view showing the wheels and lower frame portion of the stroller of Figure 1;
Figure 4 is an enlarged, sectional view along line 4-4 of Figure 3;
Figure 5 is a perspective view of a stroller according to the present invention with the upper portion and rear wheels removed to facilitate illustration of the braking assembly; and
Figure 6 is a perspective view of a stroller according to the present invention with the upper portion and rear wheels removed to facilitate illustration of the braking assembly.
Figure 7 is a perspective view of a stroller wheel showing a braking assembly useful in the present invention.

### Detailed Description of the Preferred Embodiments

Referring to the Figures, a stroller 10 according to the present invention is shown. The stroller can be used to transport children and is particularly suited for use while in-line skating.

Stroller 10 includes a frame 12 supportable on three pairs of wheels 14, 16, 18 and has a handle 20 for pushing the stroller. Frame 12 includes a lower frame portion 22 and an upper frame portion 24. In a preferred embodiment, as shown, lower frame portion 22 and upper frame portion 24 are foldable together about hinge 26. Removable pins 30 lock upper frame portion 24 to rear frame units 28 and control the folding of the frame about hinge 26. In addition, rear frame units 28 are each foldable about hinge 32 once pin 30 is removed. If desired, upper frame portions 24 can telescopically move upon release of detent pins 36 to shorten the length of the structure in the folded configuration. Other folding systems can be used, as desired.

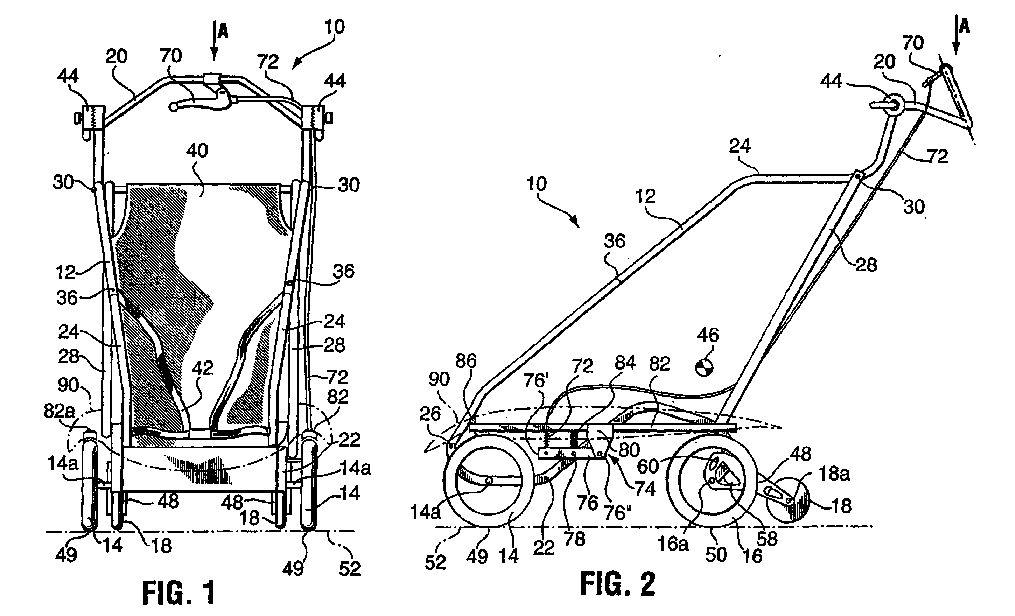

The frame supports a seat 40 and a seat belt 42 (shown in Figure 1) that are preferably formed of flexible material to permit folding. A cover (not shown) can be fit about the frame to form a partially or fully enclosed compartment about the seat. The cover is preferably formed of a material which does not interfere with the folding of the frame.

Handle 20 is connected to and extends from frame 12. Handle 20 is preferably shaped to be grasped comfortably by the skater. In one embodiment, the handle is adjustable such as, for example, by lockable gear devices 44 to select the desired handle height and/or to permit the handle to be folded into a flattened position.

To provide adequate space for a proper skating stride when using the stroller, the handle preferably extends out rearwardly from the frame. The frame can be sloped forwardly, as shown, such that the handle end is recessed to increase the space at the rear, user-end of the stroller.

The stroller includes three pairs of wheels 14, 16, 18 mounted for rotation on axles 14a, 16a and 18a, respectively. There can be additional wheels, as desired. The wheels can be of any selected size. In the illustrated embodiment, the front two sets of wheels 14, 16 have a radius to permit the stroller to ride easily over small obstacles such as stones and uneven pavement. The rear set of wheels 18 are generally the trailing wheels and can be of smaller radius than wheels 14, 16 to reduce crowding in the rear, user-end of the stroller. Front wheels 14 are positioned in front of the stroller's centre of gravity, indicated at 46, and middle wheels 16 are positioned generally behind centre of gravity 46. Centre of gravity 46 is shown in the "stroller loaded" position. When the stroller is empty, the centre of gravity will move a short distance forward but will still remain between wheels 14 and 16.

Wheels 18 are mounted on rear extensions 48 which are in turn mounted on the frame such that rear wheels 18 are positioned behind wheels 16 and rearwardly of centre of gravity 46.

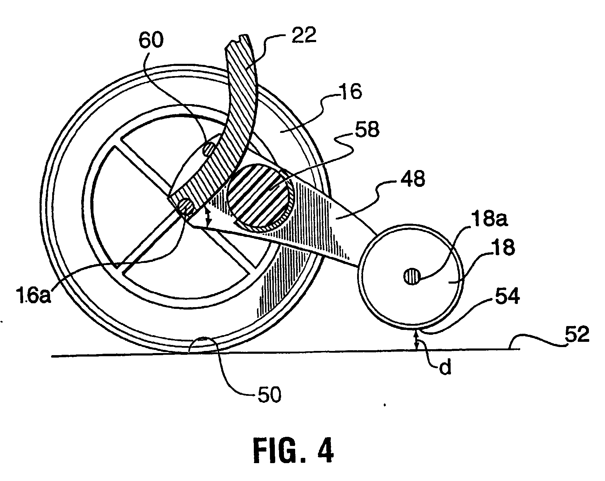

The front two sets of wheels 14, 16 are positioned on the frame to have ground contacting points 49, 50, respectively, which are substantially in a plane, generally indicated at 52. Rear set of wheels 18 is mounted on frame 12 such that their contact point 54 is positioned a selected distance, shown as d in Figure 4, above plane 52.

Extensions 48 are mounted to frame 12 in such a way that they can pivot about their connection with frame 12, as shown by arrows a in Figure 4. In the illustrated embodiment, extensions 48 include ports (cannot be seen in any of the drawings) for receiving axle 16a of wheels 16.

Elastomeric members 58 are mounted by firm engagement between the side members of extensions 48 or by any other means. Each elastomeric member acts between frame 12 and the extension on which it is mounted to bias the extension downwardly away from frame 12. Preferably each elastomeric member is formed of a material which exhibits reduced compressibility at lower pressures but enhanced compressibility at higher pressures. This permits the extensions to support some force, such as by leaning on the handle, without pivoting. However, application of greater forces cause elastomeric members 58 to compress and the stroller can be tipped back while being supported on wheels 16 and 18. A stop 60 acts to limit the degree to which the extension is biased away from frame 12 and, thereby, to maintain the selected distancing of contact point 54 above plane 52. In the present embodiment, stops 60 are adjustable to select the degree to which elastomeric members 58 are loaded as well as to adjust the heights d of wheels 18. It may be desirable to adjust height d to permit use of the stroller over rough terrain or significantly varied elevations or to maintain height d constant, where wheel wear has occurred. In one embodiment, stops 60 are removable to permit extensions 48 to be folded under the stroller to facilitate storage of the stroller.

In a preferred embodiment, wheels 14, 16 and 18 are mounted to rotate in planes 14x, 16x and 18x, respectively, parallel the tong axis 61 of the stroller extending through the front and the rear of the stroller and are, preferably, substantially restricted from pivoting out of these planes.

In use, stroller 10 is loaded with a child positioned in seat 40 and the stroller is then moved by a user by pushing on handle 20. When the user is skating, the stroller rides mainly on wheels 14 and 16. By application of force to the handle of the stroller, it is rocked about wheel 16 to ride alternately on wheels 14 and 16, on wheels 16 and 18 or on wheels 16 alone. The stroller wheels form a "rocker" arrangement wherein the contact points of the wheels form an arc. This permits the stroller to be supported on middle wheels 16 alone and, as would be appreciated, thereby facilitates turning. When it is desired to raise the front end of the stroller onto, for example, a curb, pressure can be applied to handle 20 to tip the stroller back so that it is resting on wheels 16 and 18. In a preferred embodiment, when the stroller is tipped back in this way, the front wheels are raised about four to six inches off the ground. Further pressure can then be applied to compress elastomeric member 58, thus permitting extension 48 to pivot upwardly toward frame 12 and permitting the front of the stroller to be raised a greater distance off the ground while being supported on four wheels. This maintains the stability of four wheel contact with the ground. The compressive properties of elastomeric member 58 can be selected to support various forces. This can be accomplished by varying the preload of the member or by replacing the member with a member having a different compressive rating.

Novice skaters generally have a forward stance and may tend to put more of their weight onto the stroller handle. The stroller can accommodate a reasonable application of weight in this way without tipping over wheels 18. In particular, the distance at which wheels 18 are positioned behind wheels 16 and the compressive properties elastomeric member 58 is selected with consideration as to the amount of downwardly directed force, indicated at arrow A, which is desired to be applicable to handle 20 without causing, first, the trailer to tip further back about wheels 16 while the extensions pivot by compression of members 58 and, next, the stroller to tip rearwardly about wheels 18. In a preferred embodiment, the stroller is selected to accommodate at least about 20 to 35 lbs of downward force on the handle without tipping completely over wheels 18.

A braking system is provided for braking all of wheels 14 and 16. The braking system is preferably capable of braking both the stroller and the skater pushing the stroller. The braking system includes a hand lever 70 conveniently positioned on handle 20. A brake cable 72, as is commonly used in the field of bicycles, extends to transmit force from hand lever 70 to a brake assembly 74. The brake cable sheathe is rigidly mounted at 75 to frame 22. Brake assembly 74 includes a lever 76 fixed to lower frame portion 22 by fulcrum 78. Lever 76 is connected at its first end 76' to brake cable 72 and is moveable thereby to pivot about fulcrum 78. At its opposite end 76'', lever 76 is pivotally attached to a connector 80 which is rigidly connected to a braking bar 82. Connector 80 can be a pair of plates as shown or any other means such as, for example, a U-shaped member, that can connect between the parts. Braking bar 82 is elongate and is positioned above wheels 14 and 16 on one side of the stroller. When hand lever 70 is actuated, force is transmitted through cable 72 to draw end 76' of lever 76 upwardly. This causes lever 76 to pivot about fulcrum 78 to move end 76'' downwardly. This movement of lever 76 is transmitted to braking bar 82 through connector 80. Braking bar 82 is thereby drawn down into engagement with wheels 14 and 16 on the one side of the stroller, causing them to be stopped from rotating. Braking bar 82 is preferably formed of a durable material which when engaged against the material of wheels 14, 16 will cause them to safely stop. In a preferred embodiment, the braking bar is formed of aluminum and brake pads 83 formed of high friction material such as polyurethane are mounted at the positions where the braking bar contacts the wheels, to enhance braking. The braking bar is, in the preferred embodiment, positioned to engage against the tire portion of the wheel which is made of tire materials such as, for example, rubber or polyurethane.

A compression spring 84 is positioned between lever 76 and braking bar 82 to normally bias the braking bar upwardly out of engagement with wheels. A stop member 86 is positioned above braking bar 82 to abut against the braking bar when it is biased upwardly. Since compression spring 84 is positioned to one side of connector 80, stop member 86 ensures that braking bar 82 is levered about stop member 86 and upwardly away from wheel 16.

On the opposite side of the stroller a similar braking assembly is provided to act against wheels 14, 16. The braking assembly on the opposite side of the stroller includes a lever 76a similar to lever 76, connector 80a similar to connector 80, a braking bar 82a similar to braking bar 82 and, preferably, a spring 84a similar to spring 84. A rod 87 is rigidly connected to and extends between lever 76 on one side of the stroller and lever 76a on the other side of the stroller so that the force transmitted by brake cable 72 to lever 76 is communicated to lever 76a, without the need for mare cables. Rod 87 rotates in bushings 88 in lower frame portion 22 or on separate brackets supported by frame 12.

It is apparent that although one preferred embodiment of the braking system is shown, other braking arrangements are possible such as, for example, one bar for acting against the front wheels and one bar for acting against the middle wheels, which provide that when hand lever 70 is actuated to effect a stop, all four wheels 14, 16 are braked. The braking action is applied substantially evenly to both sides of the stroller to prevent it from disadvantageously veering to one side during the stop. The braking action is also applied substantially simultaneously to both wheels 14 and wheels 16. This is desirable since when it is necessary to brake the stroller, it may be riding on wheels 16 alone and during the braking operation, the normal braking action will cause the major force of the stroller and skater to be transferred forwardly onto wheels 14. In a preferred embodiment, only one hand lever is provided to avoid uneven braking.

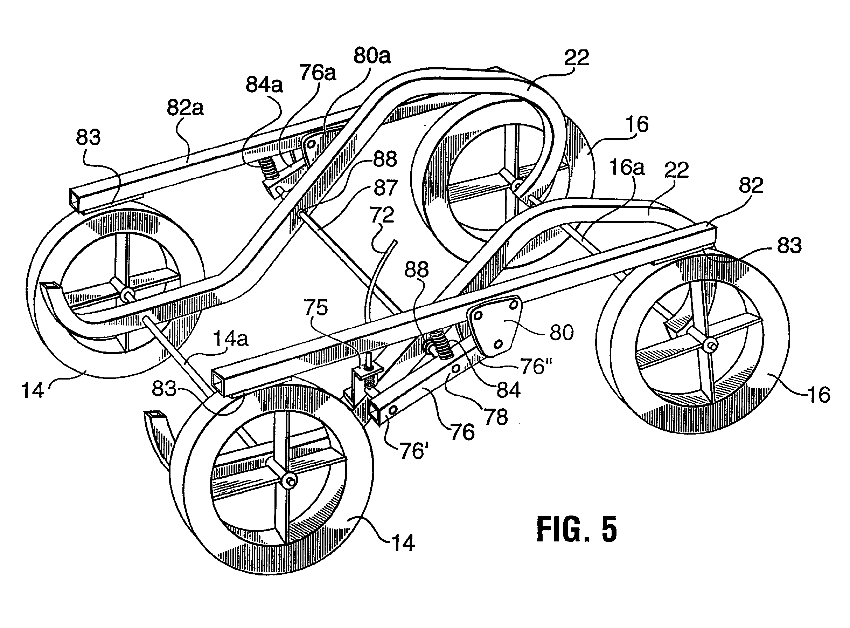

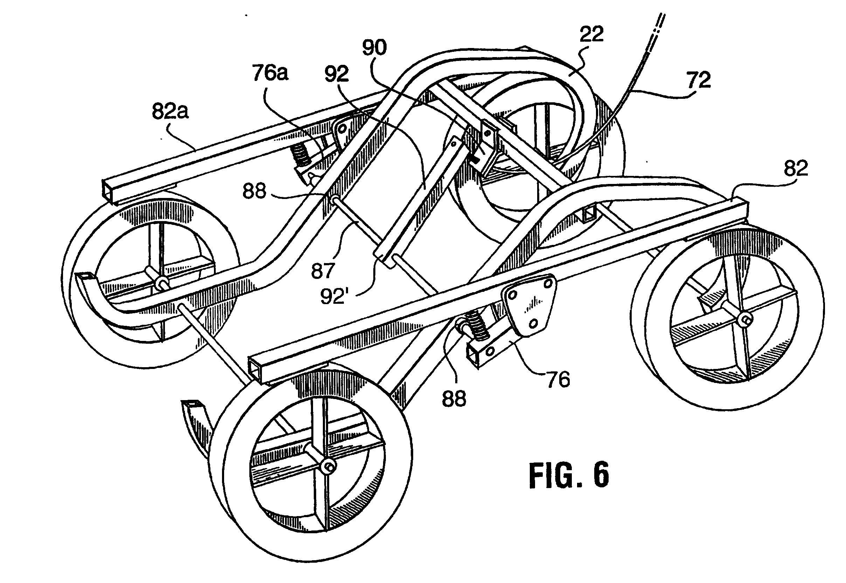

Referring to Figure 6, in strollers where, due to material flex or other factors, the transmission of force between the braking bars 82, 82a on opposite sides of the stroller is inconsistent, another braking assembly is desirable wherein brake cable 72 is more centrally located between braking bars 82, 82a. In particular, the sheathe of brake cable 72 is rigidly mounted to a bracket 90 which is in turn mounted to lower frame 22. Brake cable 72 extends beyond bracket 90 to attach to lever 92. An end 92' of lever 92 is rigidly connected to rod 87 which is, in turn, rigidly connected to and extends between levers 76, 76a. As in the embodiment of Figure 5, rod 87 rotates in bushings 88 in lower frame member 22.

In the embodiment, illustrated in Figure 6, when force is transmitted through cable 72 to draw lever 92 toward bracket 90. This causes rotation of rod 87 in bushings 88. Since rod 87 acts as a fulcrum for levers, 76, 76a, rotation of rod 87 causes, levers 76, 76a to pivot to move connectors 80, 80a and, thereby, braking bars 82, 82a to brake wheels 14, 16. In materials which experience some flexure, such a centrally located connection to the brake cable will facilitate even braking.

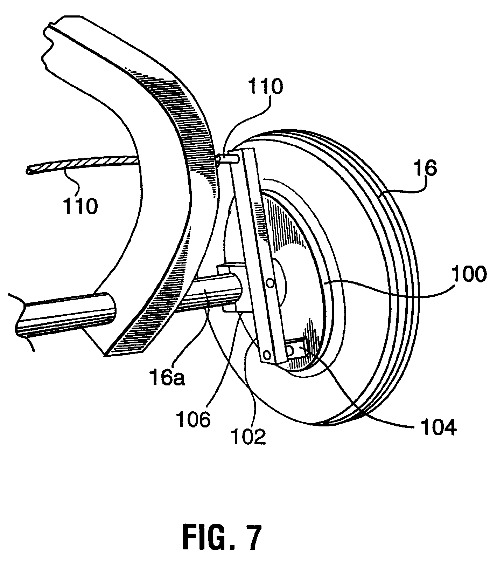

Refening to Figure 7, another braking assembly is shown that is selected to act on at least one front wheel positioned forward of the stroller's centre of gravity and at least one wheel positioned rearward of the centre of gravity. In the illustration, only one wheel 16 is shown. Each selected wheel 16 has attached to rotate therewith a disc 100 formed of durable materials such as, for example, metal or polymers. A brake lever 102 including a brake pad 104 of high friction material is positioned on a fulcrum 106 at each wheel to contact disc. Lever 102 is mounted on axle 16a and does not rotate with wheel 16. Lever 102 is normally biased, as by use of a spring, about fulcrum 106 such that brake pad 104 is spaced from disc 100. A brake cable 110 extends from a hand lever (similar to lever 70 of Figure 1) and is in communication with each brake lever 102 to drive rotation of lever about fulcrum 106 and move brake pad 104 into contact with disc 100. Brake cable 110 is adapted such as by splicing or by connection to further cables such that actuation of the hand lever controls substantially simultaneously braking at all selected wheels of the stroller.

To shield the braking system and to enhance the appearance of the stroller, preferably, a cowling 90 (shown in phantom in Figures 1 and 2), for example of rigid moulded plastic, is mounted over the braking system and wheels. The cowling can be extended to act as a seat or storage compartment, as desired. The cowling can also be shaped to form stops 86.

It will be apparent that many other changes may be made to the illustrative embodiments, while falling within the scope of the invention and it is intended that all such changes be covered by the claims appended hereto.

## Claims

1. A stroller having a forward end and a rear end and a long axis extending through the forward end and the rear end, the stroller comprising: a frame, a handle for grasping and moving the stroller and a plurality of wheels for supporting the frame including at least one forward wheel positioned forward of the stroller's centre of gravity and at least one middle wheel positioned slightly rearward of the stroller's centre of gravity and at least one rear support positioned rearward of the at least one middle wheel, there being sufficient wheels to support the stroller in an upright position when the stroller is resting on the wheels.

2. The stroller of claim 1 wherein the frame is recessed forwardly at its rear end.

3. The stroller of claim 1 wherein the frame is formed to be foldable into a collapsed position.

4. The stroller of claim 1 wherein the frame supports a seat for accepting a child.

5. The stroller of claim 1 wherein the at least one forward wheel and the at least one middle wheel are each mounted to rotate in planes parallel with the long axis of the stroller and are restricted from pivoting out of the planes.

6. The stroller of claim 1 wherein the at least one rear support is a pair of rear wheels.

7. The stroller of claim 1 wherein the at least one forward wheel and the at least one middle wheel are mounted on the frame such that they can contact a planar ground surface simultaneously and the at least one rear support is mounted on the frame to be spaced a selected distance above the ground surface when the at least one forward wheel and the at least one middle wheel are in contact with the planar surface.

8. The stroller of claim 1 wherein the at least one rear support is mounted on an extension and the extension is mounted on the frame such that the rear support extends out rearwardly of the frame.

9. The stroller of claim 8 wherein the extension is mounted to the frame by use of a pivotal connection to permit limited pivoting of the extension in a plane parallel to the stroller's long axis.

10. The stroller of claim 9 wherein a biasing means is provided to act about the pivotal connection to bias the extension downwardly.

11. The stroller of claim 1 further comprising a braking system.

12. The stroller of claim 11 wherein the braking system acts on all of the front and middle wheels of the stroller.

13. The stroller of claim 11 wherein the braking system is controlled by a hand control.

14. A stroller having a forward end and a rear end and a long axis extending through the forward end and the rear end, the stroller comprising: a frame, a handle for grasping and moving the stroller and a plurality of wheels for supporting the frame including at least one front wheel positioned forward of the stroller's centre of gravity, at least one wheel positioned rearward of the centre of gravity, there being sufficient wheels to support the stroller in an upright position when the stroller is resting on the wheels and a braking system for braking the stroller and selected to act on both the at least one front wheel and the at least one wheel positioned rearward of the centre of gravity.

15. The stroller of claim 14 wherein the braking system is controlled by a hand control.

16. The stroller of claim 14 wherein the at least one front wheel includes a front left wheel and a front right wheel and the at least one wheel positioned rearward of the centre of gravity includes a left wheel and a right wheel and the braking system includes a first bar positioned above the front left wheel and the left wheel positioned rearward of the centre of gravity, a second bar positioned above the front right wheel and the right wheel positioned rearward of the centre of gravity and an actuation means for drawing the first bar into engagement with the wheels above which it is positioned, and for drawing the second bar into engagement with wheels above which it is positioned.

17. The stroller of claim 14 further comprising at least one support positioned behind the at least one wheel positioned rearward of the centre of gravity.

18. The stroller of claim 17 wherein the at least one support is a pair of wheels.

19. The stroller of claim 17 wherein the braking system includes a disc mounted on each of the at least one front wheel and the at least one wheel positioned rearward of the centre of gravity, the discs being mounted to rotate with the wheels, a brake lever mounted adjacent each disc and including a brake pad normally biased away from the disc, the brake lever being in communication with a brake cable adapted to drive the brake pad into contact with the disc.
